# EUROPEAN PATENT APPLICATION

(11) **EP 2 202 632 A2**
(43) Date of publication of application: **30.06.2010**
(21) Application number: 09015575.5
(22) Date of filing: 16.12.2009
(51) Int. Cl.: G06F 3/14, G06F 3/048

(54) **Display control apparatus, display control method, and computer-readable medium storing display control program**

(30) Priority: 24.12.2008 JP 2008326890
(71) Applicant: Brother Kogyo Kabushiki Kaisha, Nagoya-shi, Aichi-ken 467-8561 (JP)
(72) Inventor: Toda, Katsumi, Nagoya-shi Aichi-ken, 467-8562 (JP)
(74) Representative: Kuhnen & Wacker

(57) **Abstract**

When a command is input to switch a main image displayed on a display portion of a main terminal (YES at Step S1), a determination is made as to whether the input command is a successive switching command to switch the main image successively a plurality of times (Step S5). If the command is the successive switching command (YES at Step S5), the main image is switched successively according to the command (Step S6). When it is determined that the input of the successive switching command has been terminated (YES at Step S8), the same image as the main image displayed last according to the successive switching command is designated as a display sub-image to be displayed on a display portion of a sub-terminal (Step S10). Display control information for displaying the designated display sub-image is transmitted to the sub-terminal (Step S12).

## Description

### BACKGROUND

The present invention relates to a display control apparatus, a display control method, and a computer-readable medium that stores a display control program. More specifically, the present invention relates to a display control apparatus, a display control method, and a computer-readable medium that stores a display control program that are capable of synchronizing display control with another apparatus that controls display on a display unit.

A display control method is known in which one of a plurality of terminals serves as a parent device and another terminal serves as a child device, and an image that is displayed on the parent device is caused to be displayed in the same manner on the child device (for example, refer to Japanese Laid-Open Patent Publication No. 6-110416). With this method, the parent device and the child device are connected to one another, and display control information for the image on the parent device is transmitted to the child device. Thus, even if a user of the child device does not input a command to switch the display, the same image as the image that is displayed on the parent device is displayed on the child device.

### SUMMARY

With the display control method that is described above, an operation on the parent device is performed in the same manner on the child device. Therefore, in a case where a user of the parent device performs successive switching of a plurality of images on the parent device in order to display a desired image, the desired image may not be displayed without switching through unneeded images on the child device in the same manner as on the parent device. This may also create a problem in that every time the child device switches unneeded images, electric power is consumed wastefully.

An object of the present invention is to provide a display control apparatus, a display control method, and a computer-readable medium storing a display control program that can prevent switching of unneeded images from being performed and reduce wasteful consumption of electric power in a case where the display control is synchronized with another apparatus.

A display control apparatus according to a first aspect of the present invention includes an operation portion, a display control means, a communication means, a command determination means, a termination determination means, a designation means, and a first transmission means. To the operation portion, a command is input to switch a main image that is displayed on a main display means for displaying an image. The display control means switches the main image on the main display means in accordance with the command that has been input to the operation portion. The communication means connects to and communicates with an apparatus that controls display of a sub-image that is displayed on a sub-display means for displaying an image. The command determination means determines whether the command that has been input to the operation portion is a successive switching command, which is a command to successively switch the main image a plurality of times. In a case where it has been determined by the command determination means that the command that has been input to the operation portion is the successive switching command, the termination determination means determines whether the input of the successive switching command has been terminated. In a case where it has been determined by the termination determination means that the input of the successive switching command has been terminated, the designation means designates as a display sub-image, which is a sub-image that will be displayed on the sub-display means, the main image that is displayed last on the main display means as a result of switching of the main image by the display control means in accordance with the successive switching command that has been input from the time when it is determined by the command determination means that the command that has been input to the operation portion is the successive switching command until the time when it is determined by the termination determination means that the input of the successive switching command has been terminated. The first transmission means transmits, from the communication means to the apparatus, display control information that causes the display sub-image that has been designated by the designation means to be displayed.

In other words, when the input of the successive switching command to successively switch the main image a plurality of times is terminated, the display control apparatus transmits to the apparatus the display control information for causing the sub-display means to display the same image as the last main image that is displayed on the main display means in accordance with the successive switching command that has been input. Therefore, the display control apparatus can cause the sub-display means to display only the same sub-image as the main image that is displayed last on the main display means as a result of the successive switching of the image, without causing the apparatus to perform switching of unneeded images. As a result, the electric power that is wastefully consumed due to unneeded switching of images may be reduced.

The display control apparatus may also include a first measurement means for measuring an operating time during which the operation portion is continuously operated. In a case where the operating time that has been measured by the first measurement means is equal to or more than a first specified time, the command determination means may determine that the command that has been input to the operation portion is the successive switching command. In a case where the operation of the operation portion has been terminated, the termination determination means may determine that the input of the successive switching command has been terminated. The designation means may designate as the display sub-image the main image that is displayed as a result of the switching of the main display by the display control means in accordance with the operating time, in response to a single operation of the operation portion.

In such a case, by operating the operation portion continuously for at least the first specified time, the user can successively switch the main image that is displayed on the main display means a plurality of times with a single operation. When the user operates the operation portion for at least the first specified time, the display control apparatus determines that the successive switching command is being input, and when the user terminates the operation of the operation portion, the display control apparatus determines that the successive switching command has been terminated. Further, only the same sub-image as the main image that, is displayed last on the main display means in response to the successive switching command whose input has been terminated is displayed on the sub-display means. Therefore, the user can not only cause the successive switching of the main image to be performed with a single operation, but can also cause only the desired image to be displayed on the sub-display means.

The display control apparatus may also include a second measurement means for measuring an elapsed time from the time when the operation portion is operated until the time when the operation portion is next operated. In a case where the elapsed time that has been measured by the second measurement means is less than a second specified time, the command determination means may determine that the command that has been input to the operation portion is the successive switching command. In a case where the elapsed time that has been measured by the second measurement means is equal to or more than the second specified time, the termination determination means may determine that the input of the successive switching command has been terminated. The designation means may designate as the display sub-image the main image that is displayed in accordance with the command that has been input last before it has been determined by the termination determination means that the input of the successive switching command has been terminated.

In such a case, if the measured elapsed time, that is, an interval between operations, is less than the second specified time, the display control apparatus can determine that the command that has been input is a part of the successive switching command. Thereafter, if the interval between operations becomes as long as the second specified time, the display control apparatus can determine that the successive switching command has been terminated. Further, only the same sub-image as the main image that, in accordance with the last of a series of commands that are determined to be the successive switching command, is displayed last on the main display means is displayed on the sub-display means. Therefore, by successively operating the operation portion, the user can not only perform the switching of the main image appropriately, but can also cause only a desired image to be displayed on the sub-display means.

The display control apparatus may also include a second transmission means for transmitting, from the communication means to the apparatus, display control information that causes the sub-image that is identical to the main image that is displayed in accordance with the command that has been input first among a plurality of commands that have been determined to be the successive switching command by the command determination means to be displayed on the sub-display means.

In such a case, the display control apparatus can transmit to the apparatus the display control information for causing the sub-image to be switched in accordance with the first command among the commands that have been determined to be the successive switching command, without waiting for the second specified time to elapse. Therefore, it may be possible to shorten a response time of the apparatus in relation to a first input.

The display control apparatus may also include a third transmission means for, in a case where it has been determined by the command determination means that the command that has been input to the operation portion is the successive switching command, transmitting switching-in-progress information, which is information that indicates that the main image is being successively switched a plurality of times, from the communication means to the apparatus.

In such a case, the display control apparatus can notify the apparatus that the main image is being successively switched a plurality of times. This may make it possible for the apparatus to perform processing in accordance with the information the apparatus has received. For example, the apparatus can display on the sub-display means information to indicate that the display control apparatus is successively switching the main image and can apprise the user of the sub-display means of the present situation. It may also be possible for the apparatus to anticipate that the display control information will be transmitted to the apparatus later and to make the necessary preparations for the display control of the sub-display means ahead of time.

The display control apparatus may also include a main image determination means and a transmission control means. The main image determination means may determine whether the main image that is displayed on the main display means is a specific image that has been set in advance. In a case where it has been determined by the main image determination means that the specific image is displayed, the transmission control means may control such that the display control information that causes the specific image to be displayed is not transmitted from the communication means to the apparatus.

In such a case, the display control apparatus can control such that the display control information for causing the sub-image to be switched is not transmitted while the specific image is being displayed on the main display means. This may make it possible for the display control apparatus to cause only the needed image to be displayed on the sub-display means, without causing the specific image, which may need to be displayed only on the main display means, to also be displayed on the sub-display means.

A display control method according to a second aspect of the present invention includes a step of switching a display of a main image on a main display means for displaying an image, in accordance with a command that has been input to an operation portion to switch the main image that is displayed. The display control method also includes a step of connecting to an apparatus that controls display of a sub-image on a sub-display means that displays an image. The display control method also includes a step of determining whether the command that has been input to the operation portion is a successive switching command, which is a command to successively switch the main image a plurality of times. The display control method also includes a step of determining, in a case where it has been determined that the command that has been input to the operation portion is the successive switching command, whether the input of the successive switching command has been terminated. The display control method also includes a step of designating as a display sub-image, which is a sub-image that will be displayed on the sub-display means, in a case where it has been determined that the input of the successive switching command has been terminated, the main image that is displayed last on the main display means as a result of switching of the main image in accordance with the successive switching command that has been input from the time when it is determined that the command that has been input to the operation portion is the successive switching command until the time when it is determined that the input of the successive switching command has been terminated. The display control method also includes a step of transmitting, to the apparatus, display control information that causes the designated display sub-image to be displayed.

In other words, according to the display control method, when the input of the successive switching command to successively switch the main image a plurality of times is terminated, the display control information for causing the sub-display means to display the same image as the last main image that is displayed on the main display means in accordance with the successive switching command that has been input is transmitted to the apparatus. Therefore, it may be possible to cause the sub-display means to display only the same sub-image as the main image that is displayed last on the main display means as a result of the successive switching of the images, without causing the apparatus to perform switching of unneeded images. As a result, the electric power that is wastefully consumed due to unneeded switching of images may be reduced.

According to a third aspect of the present invention, a computer-readable medium that stores a display control program that includes instructions that cause a computer to perform a step of switching a display of a main image on a main display means for displaying an image, in accordance with a command that has been input to an operation portion to switch the main image that is displayed. The display control program also causes the computer to perform a step of connecting to an apparatus that controls display of a sub-image on a sub-display means for displaying an image. The display control program also causes the computer to perform a step of determining whether the command that has been input to the operation portion is a successive switching command, which is a command to successively switch the main image a plurality of times. The display control program also causes the computer to perform a step of determining, in a case where it has been determined that the command that has been input to the operation portion is the successive switching command, whether the input of the successive switching command has been terminated. The display control program also causes the computer to perform a step of designating as a display sub-image, which is a sub-image that will be displayed on the sub-display means, in a case where it has been determined that the input of the successive switching command has been terminated, the main image that is displayed last on the main display means as a result of switching of the main image in accordance with the successive switching command that has been input from the time when it is determined that the command that has been input to the operation portion is the successive switching command until the time when it is determined that the input of the successive switching command has been terminated. The display control program also causes the computer to perform a step of transmitting, to the apparatus, display control information that causes the designated display sub-image to be displayed.

In other words, because the instructions in the display control program are executed by the computer, when the input of the successive switching command to successively switch the main image a plurality of times is terminated, the display control information for causing the sub-display means to display the same image as the last main image that is displayed by the main display means in accordance with the successive switching command that was input is transmitted to the apparatus. Therefore, it may be possible to cause the sub-display means to display only the same sub-image as the main image that is displayed last on the main display means as a result of the successive switching of the images, without causing the apparatus to perform unneeded switching of images. As a result, the electric power that is wastefully consumed due to unneeded switching of images may be reduced.

### BRIEF DESCRIPTION OF THE DRAWINGS

Exemplary embodiments will be described below in detail with reference to the accompanying drawings in which:

FIG. 1 is a system configuration diagram that shows a simplified configuration of an image display system 5;

FIG. 2 is a block diagram that shows an electrical configuration of a main terminal 1 and a sub-terminal 2;

FIG. 3 is a flowchart of press-and-hold operation processing that is performed by the main terminal 1 according to a first embodiment;

FIG. 4 is a flowchart of sub-image switching processing that is performed by the sub-terminal 2 according to the first embodiment;

FIG. 5 is a figure that shows the sub-terminal 2 displaying an operation-in-progress image 31;

FIG. 6 is a flowchart of successive operation processing that is performed by the main terminal 1 according to a second embodiment; and

FIG. 7 is a flowchart of sub-image switching processing that is performed by the sub-terminal 2 according to the second embodiment.

### DETAILED DESCRIPTION OF EXEMPLARY EMBODIMENTS

Hereinafter, a first embodiment of the present invention will be explained with reference to the drawings. Note that the drawings are used to explain technological features that the present invention can employ, and the illustrated configurations of the apparatuses and the flowcharts of the various types of processing are given as explanatory examples.

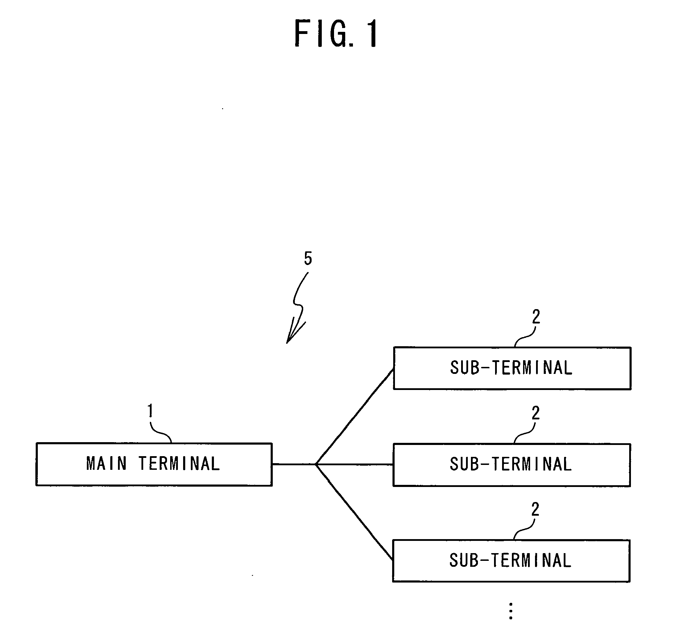

An overview of an overall configuration of a display control system 5 according to the first embodiment will be explained with reference to FIG. 1. As shown in FIG. 1, the display control system 5 includes a main terminal 1 and at least one sub-terminal 2. The sub-terminal 2 is connected to the main terminal 1 and performs communication of display control information and the like with the main terminal 1. In the present embodiment, various apparatuses are connected through a wireless LAN, but the connecting method may be freely modified and may be either one of wired and wireless.

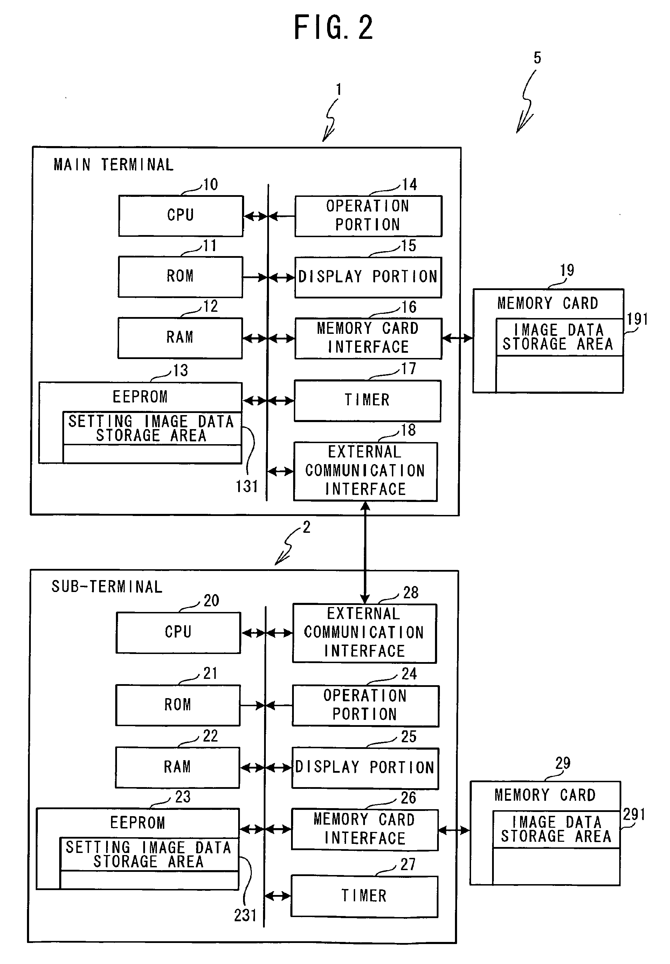

A processing sequence that is performed in the display control system 5 as a whole will be briefly explained. In the display control system 5, an image is displayed on a display portion 25 of the sub-terminal 2 (refer to FIG. 2) that is the same as an image that is displayed on a display portion 15 of the main terminal 1 (refer to FIG. 2). Specifically, if a user of the main terminal 1 switches the image that is displayed on the display portion 15 (hereinafter called a main image), display control information is transmitted from the main terminal 1 to the sub-terminal 2 in order to switch the image that is displayed on the display portion 25 of the sub-terminal 2 (hereinafter called a sub-image) in the same manner. The sub-terminal 2 switches the sub-image in accordance with the display control information that is received from the main terminal 1. Therefore, the user of the main terminal 1 can show to a user of the sub-terminal 2 an image that is the same as the main image that is displayed on the display portion 15, without the user of the sub-terminal 2 performing an operation to switch the sub-image. The display control system 5 may be used, for example, in a case where a meeting is held in which participants refer to the same image. The processing that has been explained briefly above will be described in detail later.

An electrical configuration of the main terminal 1 and the sub-terminal 2 that are included in the display control system 5 will be explained with reference to FIG. 2. The main terminal 1 and the sub-terminal 2 are both mobile terminals that include display portions. More specifically, the main terminal 1 and the sub-terminal 2 are electrophoretic display apparatuses that display images on the display portions by moving charged particles. The electrophoretic display apparatuses can maintain, using little electric power, images that are displayed on the display portions. In the present embodiment, one of a plurality of display terminals functions as the main terminal 1, and each of the other terminals functions as the sub-terminal 2.

The main terminal 1 includes a CPU 10 that performs control of the main terminal 1. A ROM 11, a RAM 12, an EEPROM 13, an operation portion 14, the display portion 15, a memory card interface 16, a timer 17, and an external communication interface 18 are connected to the CPU 10 through a bus. The ROM 11 stores programs, initial values, and the like for operating the main terminal 1. The programs that are stored in the ROM 11 include a program for performing processing that controls the display of the image, which will be described later, and a program for synchronizing the image display with the sub-terminal 2. The RAM 12 stores various types of data temporarily. The EEPROM 13 is a nonvolatile memory. The operation portion 14 includes push-type operation buttons that accept inputs from the user. The display portion 15 displays an image. The memory card interface 16 connects a memory card 19 to the main terminal 1. The timer 17 measures time. The external communication interface 18 connects the main terminal 1 to the sub-terminal 2 and communicates with the sub-terminal 2.

The EEPROM 13 includes a setting image data storage area 131. The setting image data storage area 131 stores data for a setting image that is displayed on the display portion 15 in a case where the user makes various types of settings. An image data storage area 191 of the memory card 19 stores image data for images that may be displayed on the display portion 15, such as images of characters, drawings, photographs, and the like. The user can cause various types of images to be displayed on the display portion 15 by replacing the memory card 19 to be connected.

The main terminal 1 according to the first embodiment switches the main image that is displayed on the display portion 15 in accordance with an operating time of an operation button for inputting a command to switch the image. For example, if an operation button for switching the main image to a next page is pressed (operated) and the operating time is less than a first specified time, processing may be performed that switches the main image that is displayed on the display portion 15 only to the next page. If the operation button that switches the main image to the next page is operated for at least the first specified time, processing may be performed that successively switches the main image five pages forward at specified time intervals. The same sort of processing may be performed when an operation button for switching the main image to a preceding page is operated. In other words, the user of the main terminal 1 can successively switch the main image by pressing and holding the operation buttons.

The sub-terminal 2 includes a CPU 20, a ROM 21, a RAM 22, an EEPROM 23, an operation portion 24, the display portion 25, a memory card interface 26, a timer 27, and an external communication interface 28. The configuration of these elements is the same as in the main terminal 1, so an explanation will be omitted.

A memory card 29 is connected to the memory card interface 26 of the sub-terminal 2. The memory card 29 stores image data that are the same as the image data that are stored in the memory card 19 that is connected to the main terminal 1. By displaying an image on the display portion 25 in accordance with the display control information that is transmitted from the main terminal 1 and based on the image data that are stored in the memory card 29, the sub-terminal 2 synchronizes the display of the image with the main terminal 1. The communications between the external communication interfaces 18 and 28 may be either one of wired communications and wireless communications.

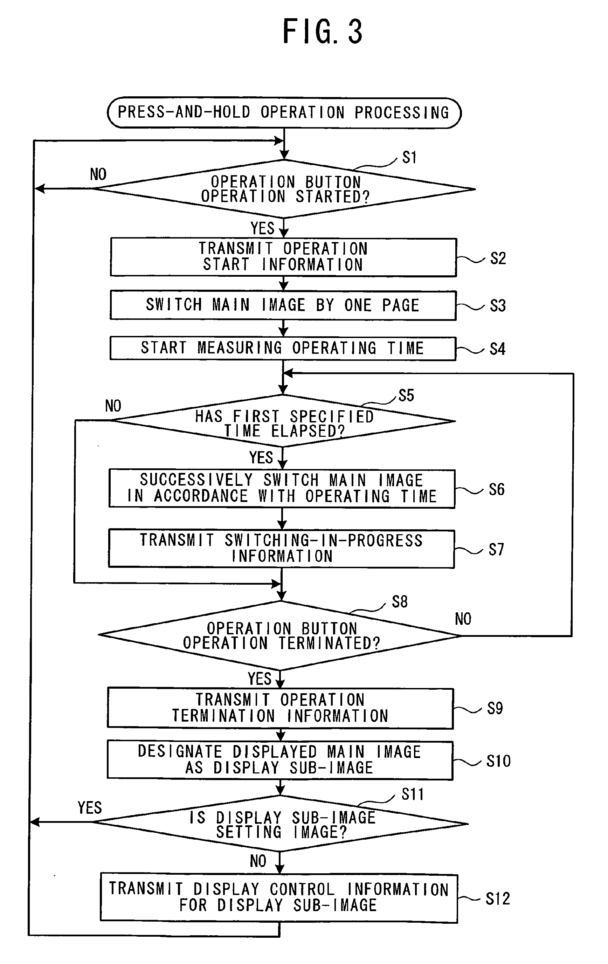

Press-and-hold operation processing that is performed by the main terminal 1 according to the first embodiment will be explained below with reference to FIG. 3. The press-and-hold operation processing is performed by the CPU 10 while the main image is being displayed on the display portion 15 and in accordance with a program that is stored in the ROM 11.

When the press-and-hold operation processing shown in FIG. 3 is started, a determination is made as to whether an operation (pressing) has been started on one of the operation buttons of the operation portion 14 that is for the user to input the command to switch the image (Step S1). The determination processing at Step S1 is repeated for as long as the operation on the operation button has not been started (NO at Step S1). In a case where the operation has been started (YES at Step S1), operation start information is transmitted to the sub-terminal 2 (Step S2). The operation start information is information that indicates that the operation of the operation button has been started. As will be described later, if a power mode of the sub-terminal 2 is a power saving mode when the operation start information is received, the power mode is changed to a normal mode. The speed at which the image is switched is faster in the normal mode than in the power saving mode.

The main image that is displayed on the display portion 15 is switched by one page in accordance with the type of the operation button that is being operated (Step S3). In a case where the operation button that switches the main image to the next page is being operated, the processing that switches the main image to the next page is performed. In a case where the operation button that switches the main image to the preceding page is being operated, the processing that switches the main image to the preceding page is performed.

Measurement is started of an operating time during which the operation button continues to be operated (Step S4). Based on the measured operating time, a determination is made as to whether the first specified time has elapsed since the operation of the operation button was started (Step S5). If the first specified time has not elapsed (NO at Step S5), a determination is made as to whether the operation of the operation button has been terminated (Step S8). If the operation has not been terminated (NO at Step S8), the processing returns to Step S5. The processing at Steps S5 and S8 is performed repeatedly, and in a case where the first specified time elapses (YES at Step S5) before the operation of the operation button is terminated, it is determined that a successive switching command has been input. The successive switching command is a command to successively switch the main image.

Processing that successively switches the main image is performed in accordance with the measured operating time (Step S6). Specifically, as described above, processing is performed that successively switches the main image five pages forward or five pages back at specified time intervals, depending on the operation button that has been operated. For example, the main image may be switched from a first page to a sixth page at the time when two seconds has elapsed since the operation of the operation button was started. No switching is performed between two seconds and three seconds since the operation of the operation button was started, and the main image is switched from the sixth page to an eleventh page at the time when three seconds has elapsed. The processing is performed in accordance with the operating time to successively switch the main image.

Switching-in-progress information is transmitted to the sub-terminal 2 (Step S7). The switching-in-progress information is information that indicates that the main image that is displayed on the display portion 15 is being successively switched a plurality of times. As will be described later, when the sub-terminal 2 receives the switching-in-progress information, the sub-terminal 2 displays on the display portion 25 an "operation-in-progress" message that indicates that the operation button of the main terminal 1 is being operated.

In a case where the operation of the operation button has been terminated (YES at Step S8), operation termination information is transmitted to the sub-terminal 2 (Step S9). The operation termination information is information that indicates that the operation of the operation button has been terminated. When the operation termination information is transmitted, the main image that is being displayed on the display portion 15 is designated as a display sub-image that will be displayed on the display portion 25 of the sub-terminal 2 (Step S10).

A determination is made as to whether the designated display sub-image is the setting image (Step S11). The setting image is the image for performing various types of settings on the main terminal 1. If the designated display sub-image is the setting image (YES at Step S11), the processing returns to Step S1. In a case where the designated display sub-image is not the setting image (NO at Step S11), display control information is transmitted to the sub-terminal 2 to cause the display sub-image to be displayed on the display portion 25 (Step S12), and the processing returns to Step S 1. The display control information in the first embodiment is information that specifies a page number of an image to be displayed. Alternatively, the display control information may be information that specifies a number of pages to be switched, such as "advance ten pages" or "go back four pages", for example.

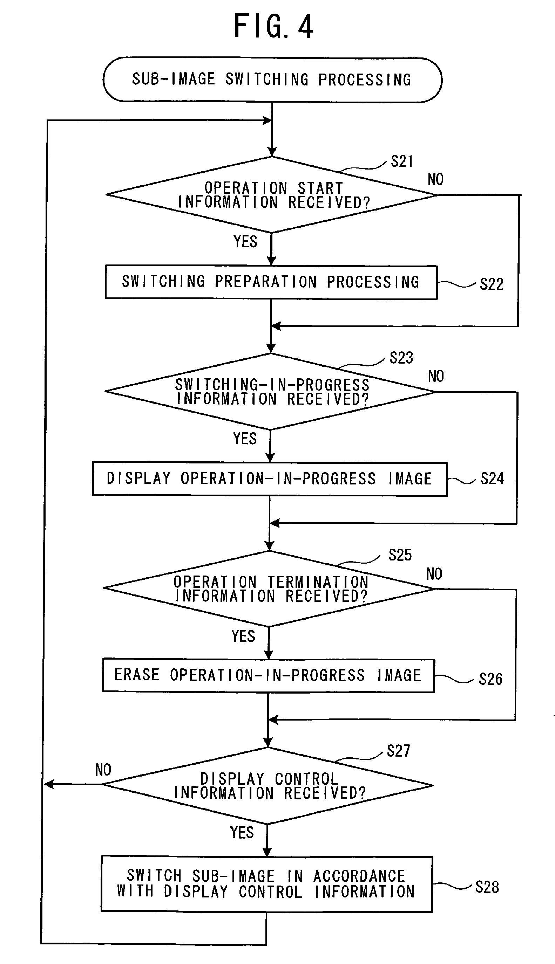

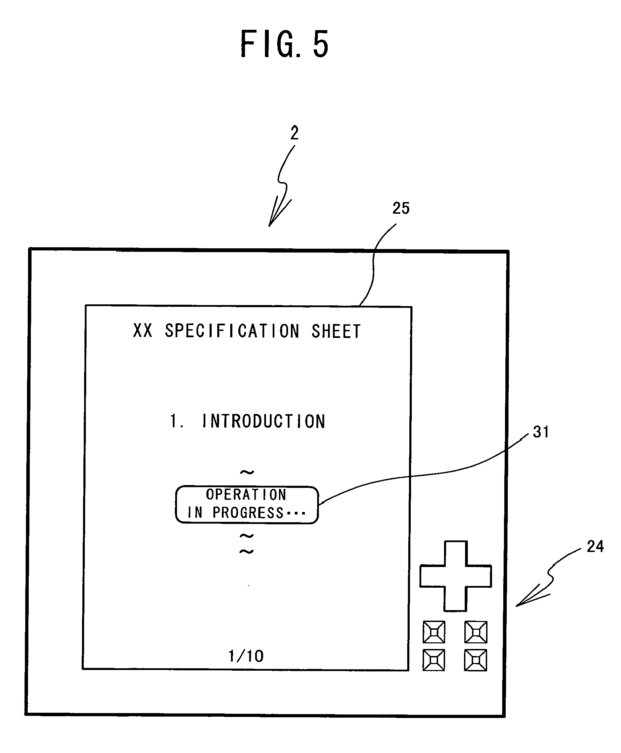

Sub-image switching processing that is performed by the sub-terminal 2 according to the first embodiment will be explained with reference to FIGS. 4 and 5. The sub-image switching processing is performed by the CPU 20 while the sub-image is being displayed on the display portion 25 and in accordance with a program that is stored in the ROM 21.

When the sub-image switching processing shown in FIG. 4 is started, a determination is made as to whether the operation start information has been received from the main terminal 1 (Step S21). In a case where the operation start information has been received (YES at Step S21), switching preparation processing is performed (Step S22). In the sub-terminal 2, processing that shifts the power mode from the normal mode to the power saving mode is performed in a case where the switching of the image has not been performed for at least a specified period of time. While the sub-terminal 2 is in the power saving mode, the speed of the switching of the image is slower than in the normal mode, but the amount of electric power that is consumed is lower than in the normal mode. In the switching preparation processing (Step S22), in a case where the power mode is the power saving mode, processing is performed that shifts the power mode from the power saving mode to the normal mode in preparation for the switching of the image. If the operation start information has not been received (NO at Step S21), the processing advances to Step S23.

A determination is made as to whether the switching-in-progress information has been received from the main terminal 1 (Step S23). In a case where the switching-in-progress information has been received (YES at Step S23), processing is performed that causes an operation-in-progress image 31 to be displayed on the display portion 25 (Step S24). For example, the operation-in-progress image 31 that is an "operation in progress" message may be displayed in the center of the display portion 25, as shown in FIG. 5. The operation-in-progress image 31 may make it easy for the user of the sub-terminal 2 to recognize that the main image on the main terminal 1 is being successively switched. In a case where the operation-in-progress image 31 is displayed in a portion of the display portion 25, as in the example in FIG. 5, the sub-terminal 2 can display the operation-in-progress image 31 quickly while consuming little electric power. If the switching-in-progress information has not been received (NO at Step S23), the processing advances to Step S25.

A determination is made as to whether the operation termination information has been received from the main terminal 1 (Step S25). In a case where the operation termination information has been received (YES at Step S25), if the operation-in-progress image 31 is being displayed on the display portion 25, processing is performed that erases the operation-in-progress image 31 (Step S26). If the operation termination information has not been received (NO at Step S25), the processing advances to Step S27.

A determination is made as to whether the display control information has been received from the main terminal 1 (Step S27). If the display control information has not been received (NO at Step S27), the processing returns to Step S21. In a case where the display control information as been received (YES at Step S27), processing is performed that switches the sub-image that is displayed on the display portion 25 in accordance with the received display control information (Step S28). In the present embodiment, processing is performed that switches the sub-image to an image on a page that is specified by the display control information. The processing then returns to Step S21.

As explained above, the main terminal 1 in the first embodiment can successively switch the main image that is displayed on the display portion 15 in accordance with a command that is input to the operation portion 14. If the successive switching command is input to successively switch the main image, the main terminal 1 switches the main image on the display portion 15 in accordance with the successive switching command that has been input. The main terminal 1 also designates as the display sub-image that will be displayed on the display portion 25 the same image as the main image that is displayed on the display portion 15 as a result of the successive switching of the image. The main terminal 1 transmits to the sub-terminal 2 the display control information to cause the designated display sub-image to be displayed. Therefore, the main terminal 1 can cause only the same image as the main image that is displayed last on the main terminal 1 as a result of the successive switching of the image to be appropriately displayed on the sub-terminal 2, without causing the sub-terminal 2 to perform switching of unneeded images. This may reduce the electric power that is wastefully consumed due to switching of unneeded images in the sub-terminal 2.

Because the sub-terminal 2 is an electrophoretic display device, the sub-terminal 2 can maintain the image that is displayed on the display portion 25 by using less electric power than other display apparatuses do. On the other hand, the sub-terminal 2 may require a longer time to switch the image to another than do other display apparatuses. Therefore, if the sub-terminal 2 performs the switching of the image successively for a plurality of times, a long time may be required before the image that the user wants to display is fmally displayed. However, the main terminal 1 of the first embodiment can cause only the needed image to be displayed quickly on the display portion 25, without causing the sub-terminal 2 to perform useless switching of the image in the process. Accordingly, the main terminal 1 can cause only the needed image to be displayed quickly on the sub-terminal 2, while causing the image that is displayed on the display portion 25 to be maintained by using little electric power. The difference in the time until the desired image is displayed can also be shortened, even in a case where the speed of the switching of the display in the sub-terminal 2 is slower than in the main terminal 1.

The user of the main terminal 1, by continuously operating the operation button of the operation portion 14 for at least the first specified time, can successively switch the main image that is displayed on the display portion 15 with a single operation. The main terminal 1 can use the time during which the operation button is continuously operated to easily determine that the successive switching command, which is the command to successively switch the image a plurality of times, has been input.

The main terminal 1 can transmit to the sub-terminal 2 the switching-in-progress information that indicates that the main image is being successively switched. The sub-terminal 2 can use the receiving of the switching-in-progress information as a trigger to notify the user that the main image is being successively switched. Furthermore, in a case where the setting image for allowing the user to perform various types of settings on the main terminal 1 is displayed on the display portion 15, the main terminal 1 can perform control such that the display control information is not transmitted to the sub-terminal 2. This may make it possible to cause only the needed image to be displayed on the sub-terminal 2, without causing an image that needs to be displayed only on the main terminal 1 to also be displayed on the sub-terminal 2.

In the first embodiment that is described above, the main terminal 1 is equivalent to a display control apparatus of the present invention, and the sub-terminal 2 is equivalent to an apparatus of the present invention. The display portion 15 of the main terminal 1 is equivalent to a main display means, and the operation portion 14 of the main terminal 1 is equivalent to an operation portion. The CPU 10 of the main terminal 1 that switches the display of the main image at Steps S3 and S6 in FIG. 3 functions as a display control means. The display portion 25 of the sub-terminal 2 is equivalent to a sub-display means. The external communication interface 18 of the main terminal 1 is equivalent to a communication means.

The CPU 10 that, in a case where the operating time of the operation button is at least the first specified time, determines that a command that the user has input is the successive switching command at Step S5 in FIG. 3, functions as a command determination means. The CPU 10 that, in a case where the operation of the operation button has been terminated at Step S8 in FIG. 3, determines that the input of the successive switching command has been terminated functions as a termination determination means. The CPU 10 that, at Step S 10 in FIG. 3, in accordance with the operating time of the operation button, designates as the display sub-image the main image that is displayed last on the display portion 15 functions as a designation means. The CPU 10 that, at Step S12 in FIG. 3, transmits from the external communication interface 18 to the sub-terminal 2 the display control information that causes the display sub-image to be displayed functions as a first transmission means.

The CPU 10 that, at Step S4 in FIG. 3, measures the operating time of the operation button of the operation portion 14 functions as a first measurement means. The CPU 10 that, at Step S7 in FIG. 3, transmits the switching-in-progress information from the external communication interface 18 to the sub-terminal 2 functions as a third transmission means. The setting image is equivalent to a specific image. The CPU 10 that, at Step S11 in FIG. 3, determines whether the display sub-image is the setting image and, in a case where the display sub-image is the setting image, performs control such that the display control information is not transmitted functions as a main image determination means and a transmission control means.

The processing that switches the display of the main image at Steps S3 and S6 in FIG. 3 is equivalent to a step of switching a display of a main image on a main display means. The processing that connects to the sub-terminal 2 and performs communication at Steps S2, S7, S9, and S12 in FIG. 3 is equivalent to a step of connecting to an apparatus. The processing that, in a case where the operating time of the operation button is at least the first specified time at Step S5 in FIG. 3, determines that the command that the user has input is the successive switching command is equivalent to a step of determining whether the command is a successive switching command. The processing that, in a case where the operating of the operation button has been terminated at Step S8 in FIG. 3, determines that the input of the successive switching command has been terminated is equivalent to a step of determining whether the input of the successive switching command has been terminated. The processing that, at Step S10 in FIG. 3, in accordance with the operating time of the operation button, designates as the display sub-image the main image that is displayed last on the display portion 15 is equivalent to a step of designating as a display sub-image the main image that is displayed last on the main display means as a result of switching of the main image in accordance with the successive switching command. The processing that, at Step S12 in FIG. 3, transmits from the external communication interface 18 to the sub-terminal 2 the display control information that causes display control of the display sub-image to be performed is equivalent to a step of transmitting, to the apparatus, display control information that causes the designated display sub-image to be displayed.

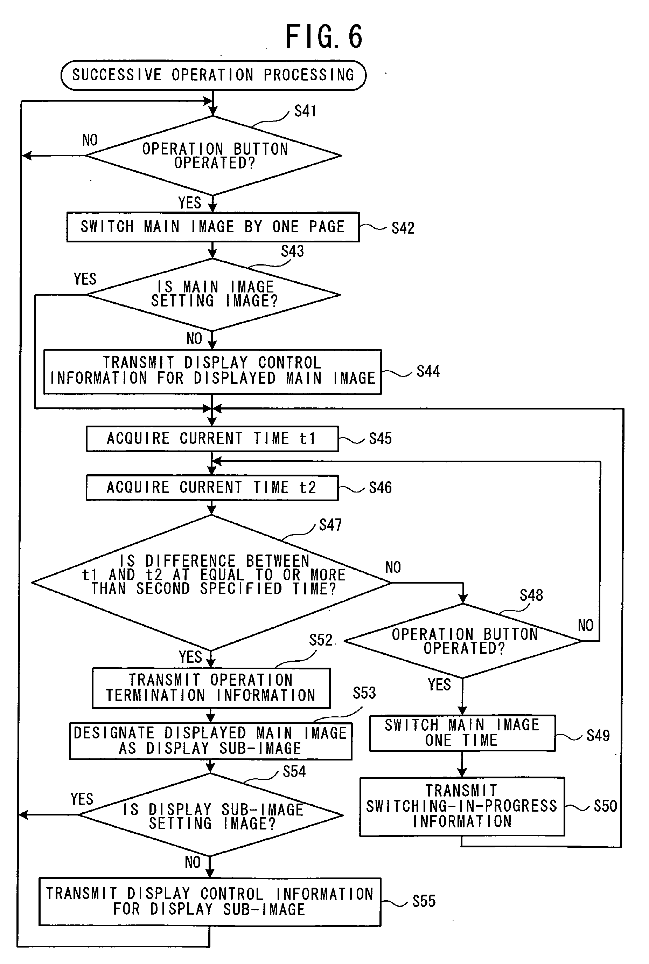

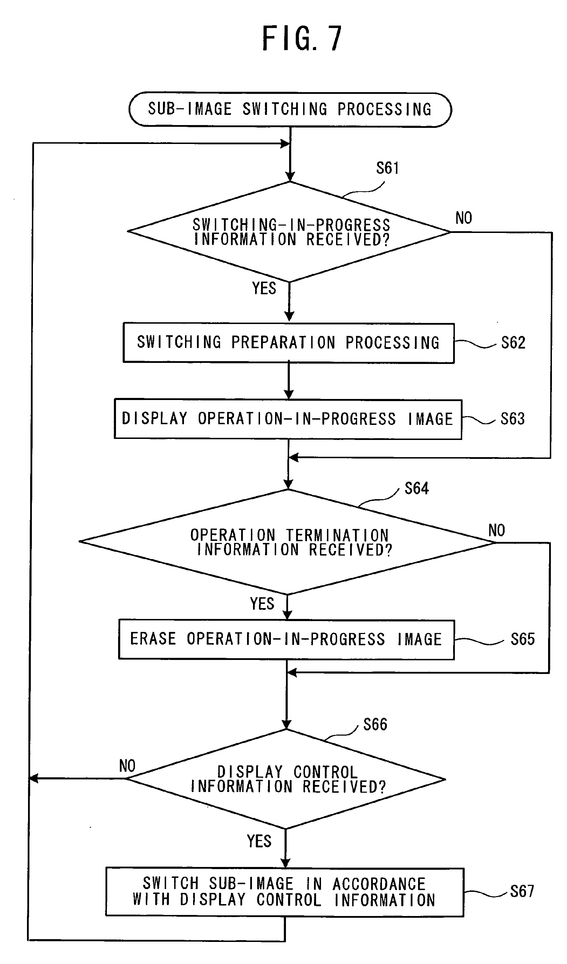

Next, a second embodiment of the present invention will be explained with reference to FIGS. 6 and 7. With the exception of processing shown in FIGS. 6 and 7, a display control system 5 according to the second embodiment is the same as the display control system 5 according to the first embodiment. Accordingly, identical structural elements are denoted by identical reference numerals, and explanation of those elements will be omitted.

The display control system 5 according to the second embodiment is a modified example of the display control system 5 according to the first embodiment. The previously described main terminal 1 according to the first embodiment, in a case where the operating time of the operation button of the operation portion 14 is equal to or more than the first specified time, successively switches the main image in accordance with the operating time. In contrast, the main terminal 1 according to the second embodiment, which is described below, in a case where an interval between operations of the operation button of the operation portion 14 is less than a second specified time, determines that a command from the user to switch the image is the successive switching command. In other words, by operating the operation button successively, the user of the main terminal 1 can successively switch the main image and can cause only the desired image to be displayed on the sub-terminal 2.

Successive operation processing that is performed by the main terminal 1 according to the second embodiment will be explained with reference to FIG. 6. The successive operation processing is performed by the CPU 10 while the main image is being displayed on the display portion 15 and in accordance with a program that is stored in the ROM 11. When the successive operation processing is started, a determination is made as to whether the one of the operation buttons that are included in the operation portion 14 that is for the user to input the command to switch the image has been operated (Step S41). If the operation button has not been operated (NO at Step S41), the determination processing at Step S41 is performed repeatedly. In a case where the operation button has been operated (YES at Step S41), the main image that is being displayed on the display portion 15 is switched by one page in accordance with the type of the operation button that is being operated (Step S42).

A determination is made as to whether the main image that is displayed after the switching is the setting image for performing various types of settings on the main terminal 1 (Step S43). If the main image is not the setting image (NO at Step S43), the display control information for causing the main image that is being displayed to be displayed on the display portion 25 of the sub-terminal 2 is transmitted to the sub-terminal 2 (Step S44). If the main image is the setting image (YES at Step S43), the processing advances to Step S45.

Processing is performed to determine the interval between operations of the operation button. The current time is acquired as a time t1 at which the operation button is operated (Step S45). The current time is acquired as a time t2 at which the interval between operations is determined (Step S46). A determination is made as to whether a time difference between the time t1 and the time t2 is equal to or more than the second specified time (Step S47). If the time difference is less than the second specified time (NO at Step S47), a determination is made as to whether the operation button is being operated (Step S48). If the operation button is not being operated (NO at Step S48), the current time is acquired once again as the time t2 (Step S46), and the interval between operations is determined (Step S47).

In a case where the operation button is being operated (YES at Step S48) while the time difference is less than the second specified time (NO at Step S47), the main image is switched one time in accordance with the type of the operation button that is operated (Step S49). The main image may be switched by one page at a time and may also be switched by a plurality of pages at a time. The switching-in-progress information is transmitted to the sub-terminal 2 (Step S50). Then, the time t1 at which the operation button is operated is acquired once again (Step S45), and the interval between operations is determined (Steps S46, S47).

In a case where the time difference between the time t1 and the time t2 is equal to or more than the second specified time (YES at Step S47), operation termination information is transmitted to the sub-terminal 2 (Step S52). In the second embodiment, the operation termination information is information that indicates that a series of operations of the operation button has been terminated. The main image that is being displayed on the display portion 15 at that time is designated as the display sub-image that will be displayed on the display portion 25 of the sub-terminal 2 (Step S53).

A determination is made as to whether the designated display sub-image is the setting image (Step S54). If the display sub-image is the setting image (YES at Step S54), the processing returns to Step S41. If the designated display sub-image is not the setting image (NO at Step S54), the display control information for causing the display sub-image to be displayed on the display portion 25 is transmitted to the sub-terminal 2 (Step S55), and the processing returns to Step S41.

Sub-image switching processing that is performed by the sub-terminal 2 according to the second embodiment will be explained with reference to FIG. 7. The sub-image switching processing is performed by the CPU 20 while the sub-image is being displayed on the display portion 25 and in accordance with a program that is stored in the ROM 21. When the sub-image switching processing is started, a determination is made as to whether the switching-in-progress information has been received from the main terminal 1 (Step S61). In a case where the switching-in-progress information has been received from the main terminal 1 (YES at Step S61), if the power mode is the power saving mode, processing is performed that shifts the power mode from the power saving mode to the normal mode (Step S62). Processing is performed to display the operation-in-progress image 31 (refer to FIG. 5) on the display portion 25 (Step S63). If the switching-in-progress information has not been received (NO at Step S61), the processing advances to Step S64.

A determination is made as to whether the operation termination information has been received from the main terminal 1 (Step S64). In a case where the operation termination information has been received (YES at Step S64), if the operation-in-progress image 31 is being displayed on the display portion 25, processing is performed that erases the operation-in-progress image 31 (Step S65). If the operation termination information has not been received (NO at Step S64), the processing advances to Step S66.

A determination is made as to whether the display control information has been received from the main terminal 1 (Step S66). If the display control information has not been received (NO at Step S66), the processing returns to Step S61. In a case where the display control information has been received (YES at Step S66), processing is performed that switches the sub-image that is displayed on the display portion 25 in accordance with the received display control information (Step S67). The processing then returns to Step S61.

As explained above, in a case where the interval between operations of the operation button of the operation portion 14 is less than the second specified time, the main terminal 1 in the second embodiment can determine that the command that has been input by the user to switch the image is the successive switching command. In a case where the interval between operations of the operation button is equal to or more than the second specified time, the main terminal 1 can easily determine that the input of the successive switching command has been terminated. The main terminal 1 switches the main image in accordance with the successive switching command that has been input. The main terminal 1 can also cause only the same image as the main image that is displayed last on the display portion 15 as a result of the successive switching of the image to be displayed on the display portion 25 of the sub-terminal 2. Therefore, it may be possible to reduce the electric power that is wastefully consumed due to switching of the unneeded images in the sub-terminal 2.

Because the main terminal 1 does not cause the sub-terminal 2, which is an electrophoretic display device and may require a longer time to switch the image than other display devices do, to perform switching of the unneeded images, the main terminal 1 can cause a needed image to be displayed quickly on the sub-terminal 2. Moreover, even in a case where a speed of the switching of the display in the sub-terminal 2 is slower than a speed of the switching in the main terminal 1, a time difference between the times at which the desired images are respectively displayed in the main terminal 1 and the sub-terminal 2 may also be shortened.

Further, it may be possible to display on the sub-terminal 2 the sub-image that is the same with the main image that is displayed in accordance with the first command among a plurality of commands that are determined to be the successive switching commands, without waiting for the second specified time to elapse. Therefore, it may be possible to shorten the response time of the sub-terminal 2 to the first command among the successive switching commands. The main terminal 1 can also notify the sub-terminal 2 that the main image is being successively switched a plurality of times. Furthermore, the main terminal 1 can cause only the needed image to be displayed on the sub-terminal 2, without causing the setting image to be displayed on the sub-terminal 2.

In the second embodiment that is described above, the CPU 10 of the main terminal 1 that switches the display of the main image at Steps S42 and S49 in FIG. 6 functions as a display control means. The CPU 10 that, at Steps S45 and S46 in FIG. 6, measures the elapsed time from the time when the operation button is operated until the time when the operation button is next operated functions as a second measurement means. The CPU 10 that, in a case where the interval between operations of the operation button is less than the second specified time at Steps S47 and S48 in FIG 6, determines that a command that the user has input is the successive switching command functions as a command determination means. The CPU 10 that, in a case where the elapsed time from a preceding operation of the operation button is equal to or more than the second specified time at Step S47 in FIG. 6, determines that the input of the successive switching command has been terminated functions as a termination determination means. The CPU 10 that, at Step S53 in FIG. 6, in accordance with the successive switching command, designates as the display sub-image the main image that is displayed last functions as a designation means. The CPU 10 that, at Step S55 in FIG. 6, transmits to the sub-terminal 2 the display control information that causes the display sub-image to be displayed functions as a first transmission means.

The CPU 10 that, at Step S44 in FIG. 6, transmits the display control information that causes the sub-image to be displayed that is identical to the main image that is displayed in accordance with the command that the user inputs first among the plurality of commands that the main terminal 1 has determined to be the successive switching commands functions as a second transmission means. The CPU 10 that, at Step S50 in FIG. 6, transmits the switching-in-progress information to the sub-terminal 2 functions as a third transmission means. The CPU 10 that, at Step S43 and S54 in FIG. 6, determines whether the main image is the setting image and, in a case where the main image is the setting image, performs control such that the display control information is not transmitted functions as a main image determination means and a transmission control means.

The processing that switches the display of the main image at Steps S42 and S49 in FIG. 6 is equivalent to a step of switching a display of a main image on a main display means. The processing that connects to the sub-terminal 2 and performs communication at Steps S44, S50, S52, and S55 in FIG. 6 is equivalent to a step of connecting to an apparatus. The processing that, in a case where the interval between operations of the operation button is less than the second specified time at Steps S47 and S48 in FIG. 6, determines that the command that the user has input is the successive switching command is equivalent to a step of determining whether the command is a successive switching command. The processing that, in a case where the elapsed time from the preceding operation of the operation button is at least the second specified time at Step S47 in FIG. 6, determines that the input of the successive switching command has been terminated is equivalent to a step of determining whether the input of the successive switching command has been terminated. The processing that, at Step S53 in FIG. 6, in accordance with the successive switching command, designates as the display sub-image the main image that is displayed last is equivalent to a step of designating as a display sub-image the main image that is displayed last on the main display means as a result of switching of the main image in accordance with the successive switching command. The processing that, at Step S55 in FIG. 6, transmits to the sub-terminal 2 the display control information that causes the display sub-image to be displayed is equivalent to a step of transmitting, to the apparatus, display control information that causes the designated display sub-image to be displayed.

The present invention is not limited to the embodiments that are described above, and various modifications may be possible. First, in the embodiments that are described above, the main terminal 1 and the sub-terminal 2 are both mobile terminals that are provided with display portions. However, at least one of the main terminal 1 and the sub-terminal 2 may also be changed to another type of apparatus such as a known personal computer or the like. It is also not necessary for the terminals to be mobile. A control apparatus that controls the display on the display portion may also be provided separately from the display portion. The method of synchronizing the main terminal 1 and the sub-terminal 2 is also not limited to the method that is described above. Any method that is capable of controlling the display on the display portion and synchronizing communication with another apparatus may be used. The main terminal 1 and the sub-terminal 2 are also not limited to being electrophoretic display devices. The operation buttons of the operation portion 14 are also not limited to being push-type buttons and may also be a different operation unit such as a touch panel or the like.

The display control information that is the information that controls the display of the image on the sub-terminal 2 may be modified as desired. In the embodiments that are described above, the memory cards 19 and 29 in which the identical image data are stored are respectively connected to the main terminal 1 and the sub-terminal 2. The display control information is the data that specifies the page number of the image that will be displayed on the sub-terminal 2, and the sub-terminal 2 displays the image in accordance with the image data for the specified page number, which are among the image data that are stored in the memory card 29 for a plurality of images. However, the main terminal 1 may also control the display of the image on the sub-terminal 2 by transmitting to the sub-terminal 2 the image data for the image for which the display control will be performed.

The image that is displayed only on the main terminal 1 and is not displayed on the sub-terminal 2 is not limited to being the setting image. For example, the user of the main terminal 1 may select in advance an image that the user does not want to be show the user of the sub-terminal 2. A determination may then be made in the main terminal 1, at one of Step S11 in FIG. 3 and Step S54 in FIG. 6, as to whether the display sub-image is the image that was selected in advance. If the display sub-image is the selected image, processing may then be performed such that the transmission of the display control information is not performed. It would thus be possible to omit wasteful processing by performing control such that an image that the user of the sub-terminal 2 does not need to see and an image that the user of the main terminal 1 does not want to show are not displayed on the sub-terminal 2.

At Step S10 in FIG. 3 and at Step S53 in FIG. 6, the main image that is being displayed on the display portion 15 as a result of the switching that is performed in accordance with the successive switching command is designated as the display sub-image that will be displayed on the sub-terminal 2. However, the main terminal 1 may also designate as the display sub-image the main image that will be displayed last as a result of the successive switching command before the last main image is actually displayed on the display portion 15, and then transmit the display control information. This would make it possible to start the switching of the image on the sub-terminal 2 promptly, even in a case where the speed at which the image is switched on the display portion 15 is slow. On the other hand, the processing that designates the display sub-image at Step S10 in FIG. 3 and at Step S53 in FIG. 6 may be omitted, and the display control information for the main image that is being displayed on the display portion 15 at that time may simply be transmitted at Step S12 in FIG. 3 and at Step S55 in FIG. 6, such that the image is displayed on the sub-terminal 2.

The press-and-hold operation processing shown in FIG. 3 can be modified. The transmission processing for the operation start information that indicates that the operation of the operation button has been started (Step S2) may be omitted. The content of the processing that successively switches the main image (Step S6) is also not limited to the content that is described above. For example, the interval at which the switching of the pages is performed may be made shorter as the operating time of the operation button becomes longer, such that the speed of the switching is increased.

The successive operation processing shown in FIG. 6 can also be modified. In the second embodiment that is described above, the display control information is transmitted in accordance with the first command among the successive switching commands (Step S44) in order to shorten the switching response time in a case where the switching of the image by only one page will be performed. However, it may be possible to omit this processing. In addition, in the second embodiment that is described above, in a case where the switching by only one page is be performed, the display control information that has the same content is transmitted two times (Steps S44, S55), but this can also be modified. For example, in a case where the interval between operations of the operation button is less than the second specified time (YES at Step S48), the CPU 10 may set a flag to ON that indicates that the input of the successive switching command is in progress. Then, if the flag is not set to ON in a case where the interval between operations of the operation button has become equal to or more than the second specified time (YES at Step S47), the processing may return to Step S41. The processing that transmits the display control information that has the same content may thus be omitted.

It may also be acceptable to make it possible to switch a display mode between a mode in which the only images that the user of the main terminal 1 desires are displayed on the sub-terminal 2, as described in the above embodiments, and a mode in which all the main images are displayed on the sub-terminal 2. It may also be possible for both the first embodiment and the second embodiment to be implemented. For example, in the press-and-hold operation processing in FIG. 3, in a case where the operation of the operation button is terminated (YES at Step S8) before the first specified time has elapsed (NO at Step S5), the processing may shift to Step S42 in FIG. 6. This may make it possible for one of the processing in the first embodiment and the processing in the second embodiment to be performed in accordance with the operating state of the operation button. It may also be acceptable to make it possible for the user to select one of the processing in the first embodiment and the processing in the second embodiment to be performed. An LED may also be made to emit light and audio may also be output instead of displaying the operation-in-progress image 31 (refer to FIG. 5) or in conjunction with displaying the operation-in-progress image 31.

## Claims

1. A display control apparatus (1), comprising:
an operation portion (14) to which a command is input to switch a main image that is displayed on a main display means (15) for displaying an image;
a display control means (10) for switching the main image on the main display means (15) in accordance with the command that has been input to the operation portion (14);
a communication means (18) for connecting to and communicating with an apparatus (2) that controls display of a sub-image that is displayed on a sub-display means (25) for displaying an image;
a command determination means (10) for determining whether the command that has been input to the operation portion (14) is a successive switching command, the successive switching command being a command to successively switch the main image a plurality of times;
a termination determination means (10) for, in a case where it has been determined by the command determination means (10) that the command that has been input to the operation portion (14) is the successive switching command, determining whether the input of the successive switching command has been terminated;
a designation means (10) for, in a case where it has been determined by the termination determination means (10) that the input of the successive switching command has been terminated, designating as a display sub-image the main image that is displayed last on the main display means (15) as a result of switching of the main image by the display control means (10) in accordance with the successive switching command that has been input from the time when it is determined by the command determination means (10) that the command that has been input to the operation portion (14) is the successive switching command until the time when it is determined by the termination determination means (10) that the input of the successive switching command has been terminated, the display sub-image being a sub-image that will be displayed on the sub-display means (25); and
a first transmission means for transmitting, from the communication means (18) to the apparatus (2), display control information that causes the display sub-image that has been designated by the designation means (10) to be displayed.

2. The display control apparatus (1) according to claim 1, further comprising:
a first measurement means (10) for measuring an operating time during which the operation portion (14) is continuously operated,
wherein:
the command determination means (10), in a case where the operating time that has been measured by the first measurement means (10) is equal to or more than a first specified time, determines that the command that has been input to the operation portion (14) is the successive switching command;
the termination determination means (10), in a case where an operation of the operation portion has been terminated, determines that the input of the successive switching command has been terminated; and
the designation means (10) designates as the display sub-image the main image that is displayed as a result of the switching of the main display by the display control means (10) in accordance with the operating time, in response to a single operation of the operation portion.

3. The display control apparatus (1) according to claim 1, further comprising:
a second measurement means (10) for measuring an elapsed time from the time when the operation portion (14) is operated until the time when the operation portion (14) is next operated,
wherein:
the command determination means (10), in a case where the elapsed time that has been measured by the second measurement means (10) is less than a second specified time, determines that the command that has been input to the operation portion (14) is the successive switching command;
the termination determination means (10), in a case where the elapsed time that has been measured by the second measurement means (10) is equal to or more than the second specified time, determines that the input of the successive switching command has been terminated; and
the designation means (10) designates as the display sub-image the main image that is displayed in accordance with, the command that has been input last before it has been determined by the termination determination means (10) that the input of the successive switching command has been terminated.

4. The display control apparatus (1) according to claim 3, further comprising:
a second transmission means (10) for transmitting, from the communication means (18) to the apparatus (2), display control information that causes the sub-image that is identical to the main image that is displayed in accordance with the command that has been input first among a plurality of commands that have been determined to be the successive switching command by the command determination means (10) to be displayed on the sub-display means (25).

5. The display control apparatus (1) according to any one of claims 1 to 4, further comprising:
a third transmission means (10) for, in a case where it has been determined by the command determination means (10) that the command that has been input to the operation portion (14) is the successive switching command, transmitting switching-in-progress information from the communication means (18) to the apparatus (2), the switching-in-progress information being information that indicates that the main image is being successively switched a plurality of times.

6. The display control apparatus (1) according to any one of claims 1 to 5, further comprising:
a main image determination means (10) for determining whether the main image that is displayed on the main display means (15) is a specific image that has been set in advance; and
a transmission control means (10) for, in a case where it has been determined by the main image determination means (10) that the specific image is displayed, controlling such that display control information that causes the specific image to be displayed is not transmitted from the communication means (18) to the apparatus (2).

7. A display control method, comprising the steps of:
switching a display of a main image on a main display means (15) for displaying an image, in accordance with a command that has been input to an operation portion (14) to switch the main image that is displayed;
connecting to an apparatus (2) that controls display of a sub-image on a sub-display means (25) for displaying an image;
determining whether the command that has been input to the operation portion (14) is a successive switching command, the successive switching command being a command to successively switch the main image a plurality of times;
determining, in a case where it has been determined that the command that has been input to the operation portion (14) is the successive switching command, whether the input of the successive switching command has been terminated;
designating as a display sub-image, in a case where it has been determined that the input of the successive switching command has been terminated, the main image that is displayed last on the main display means (15) as a result of switching of the main image in accordance with the successive switching command that has been input from the time when it is determined that the command that has been input to the operation portion (14) is the successive switching command until the time when it is determined that the input of the successive switching command has been terminated, the display sub-image being a sub-image that will be displayed on the sub-display means (25); and
transmitting, to the apparatus, display control information that causes the designated display sub-image to be displayed.

8. A computer-readable medium (11) that stores a display control program, the display control program comprising instructions that cause a computer to perform the steps of:
switching a display of a main image on a main display means (15) for displaying an image, in accordance with a command that has been input to an operation portion (14) to switch the main image that is displayed;
connecting to an apparatus (2) that controls display of a sub-image on a sub-display means (25) for displaying an image;
determining whether the command that has been input to the operation portion (14) is a successive switching command, the successive switching command being a command to successively switch the main image a plurality of times;
determining, in a case where it has been determined that the command that has been input to the operation portion (14) is the successive switching command, whether the input of the successive switching command has been terminated;
designating as a display sub-image, in a case where it has been determined that the input of the successive switching command has been terminated, the main image that is displayed last on the main display means (15) as a result of switching of the main image in accordance with the successive switching command that has been input from the time when it is determined that the command that has been input to the operation portion (14) is the successive switching command until the time when it is determined that the input of the successive switching command has been terminated, the display sub-image being a sub-image that will be displayed on the sub-display means (25); and
transmitting, to the apparatus, display control information that causes the designated display sub-image to be displayed.
